# EUROPEAN PATENT SPECIFICATION

(11) **EP 1 507 613 B1**
(45) Date of publication and mention of the grant of the patent: **27.01.2010**
(21) Application number: 03747514.2
(22) Date of filing: 25.04.2003
(51) Int. Cl.: B22D 17/30

(54) **INJECTION MOLDING METHOD AND APPARATUS WITH BASE MOUNTED FEEDER**
SPRITZGIESSVERFAHREN UND -VORRICHTUNG MIT BASISMONTIERTER ZUFÜHRVORRICHTUNG
PROCEDE DE MOULAGE PAR INJECTION ET APPAREIL A DISPOSITIF D'ALIMENTATION SUR SOCLE

(30) Priority: 01.05.2002 US 135396
(43) Date of publication of application: 23.02.2005
(73) Proprietor: TAKATA CORPORATION, Tokyo 106-8510 (JP)
(72) Inventor: KONO, Kaname, Tokyo 106 8510 (JP)
(74) Representative: Baumgärtel, Gunnar
(86) International application number: PCT/IB2003/001598
(87) International publication number: WO 2003/092932

(56) References cited:
- US-A- 5 836 372
- US-A- 5 983 976
- US-A1- 2001 052 405

## Description

### FIELD OF THE INVENTION

The invention generally relates to a method and apparatus for manufacturing metallic parts, and more particularly to a method and apparatus for manufacturing metallic parts by a process involving injection of a melted metal into a mold.

### BACKGROUND OF THE INVENTION

One method used to produce molded metallic parts from melted metal is by die casting. One die casting system and method are described in U.S. Patent No. 5,983,97:6, hereby incorporated by reference. Die casting methods inject liquid metal into a mold.

Semi-solid methods for producing molded metallic parts differ from the die casting methods by injection molding a metal in its semi-solid state rather than in its liquid state. Semi-solid injection molding systems and methods are disclosed in U.S. Patent Nos. 5,836,372 and 6,135,196, both of which are incorporated by reference herein.

The die casting system described in U.S. Patent No. 5,983,976 is illustrated in Figure 1. The system 10 includes an injection molding apparatus 10 and a mold 14. Apparatus 10 is preferably mounted on wheels and/or rails (not shown) such that it may be retracted from the mold 14 after each injection step and advanced toward the mold 14 before each injection step by a motor or hydraulics (not shown).

The apparatus 10 contains a melt feeder 23 provided with at least one heating element 25 disposed around its outer periphery. The feeder 23 is mounted on an inclined temperature-controlled metering barrel 30 such that the liquid metal flows from the feeder 23 to barrel 30 by way of gravity through a feeder conduit or port 27. A ram or metering rod 32 is arranged coaxially with the barrel 30 and extends along the center axis of the barrel 30. The ram 32 is controlled by motor 33 for axial movement in both retracting and advancing directions along the barrel 30 to meter the amount of metal leaving barrel 30 and for rotation around its own axis if stirring of the melted metal is desired inside barrel 30. The motor 33 is mounted on the upper end of barrel 30.

The metering barrel 30 is mounted over an injection or accumulation barrel 50. The metering barrel 30 is mounted above the injection barrel 50 such that it is inclined with respect to the horizontal direction. An inlet port or conduit 37 is located between the barrels through which the metal flows between the metering barrel 30 and injection barrel 50.

The injection barrel 50 contains a plunger or piston 45 and an injection nozzle 57. The plunger 45 contains a seal, such as O-ring(s) 41, to form an air tight seal with the inner surface of the injection chamber 50. The plunger 45 is advanced in the injection chamber 50 by a motor or hydraulics (not shown) to inject the liquid or semi-solid metal from the injection chamber 50 through the nozzle 57 into a mold cavity 13 in mold 14. The apparatus 10 produces high quality injection molded parts at a low cost. The remaining elements shown in Figure 1 are described in U.S. Patent No. 5,983,976.

However, the present inventor has noted several problems with the apparatus 10 which increase the apparatus maintenance costs and down time. First, the liquid metal in the metering barrel 30 seeps into the motor 33, which requires increased maintenance of the motor.
Second, the bolts which connect barrel 30 to barrel 50 need frequent replacement due to the stress placed on the bolts by the weight of the metering barrel.

### SUMMARY OF THE INVENTION

According to one preferred aspect of the present invention, there is provided an injection molding apparatus, comprising an injection chamber located in a first plane and mounted over a base of the apparatus, a metering chamber located at least partially above the first plane, and in fluid communication with the injection chamber, a metering element located in the metering chamber, a first driving mechanism which moves the metering element, wherein the first driving mechanism is connected to the metering chamber, and a melt feeder in fluid communication with the metering chamber. A top of the melt feeder is located below a first opening between the metering chamber and the first driving mechanism, and/or the melt feeder is mounted to the base of the apparatus.

According to another preferred aspect of the present invention, there is provided a metal injection molding method, comprising providing solid metal into a melt feeder, melting the solid metal into a liquid state, such that fill line of the liquid metal is below a first opening between an inclined metering chamber and a first driving mechanism, providing the liquid metal into the inclined metering chamber containing the first driving mechanism attached to an upper portion of the metering chamber, metering the metal from the metering chamber into an injection chamber located below a lower portion of the metering chamber, and injecting the metal from the injection chamber into a mold.

### BRIEF DESCRIPTION OF THE DRAWINGS

Figure 1 is a side cross sectional view of a first prior art apparatus.

Figure 2 is a schematic illustration of a side cross sectional view of an injection molding system.

Figure 3 is a schematic illustration of a front cross sectional view of the injection molding system along line A-A' in Figure 2.

### DETAILED DESCRIPT10N OF THE PREFERRED EMBODIMENTS

The present inventor has discovered that seepage of liquid metal into driving mechanism (i.e., motor and/or hydraulics) of the metering barrel may be reduced or avoided by maintaining the fill line or level of the liquid metal in the melt feeder below the opening into driving mechanism. Since the liquid metal is maintained below the level of the opening into the driving mechanism, force of gravity prevents the liquid metal from seeping into the driving mechanism.

Furthermore, the present inventor has realized that the stress on the connector which supports the metering chamber on the injection chamber may be reduced or eliminated by mounting the melt feeder directly to the machine base rather than to the metering chamber. Thus, the machine base supports the weight of the melt feeder. Less stress is placed on the metering chamber because the machine base rather than the metering chamber bears the weight of the melt feeder.

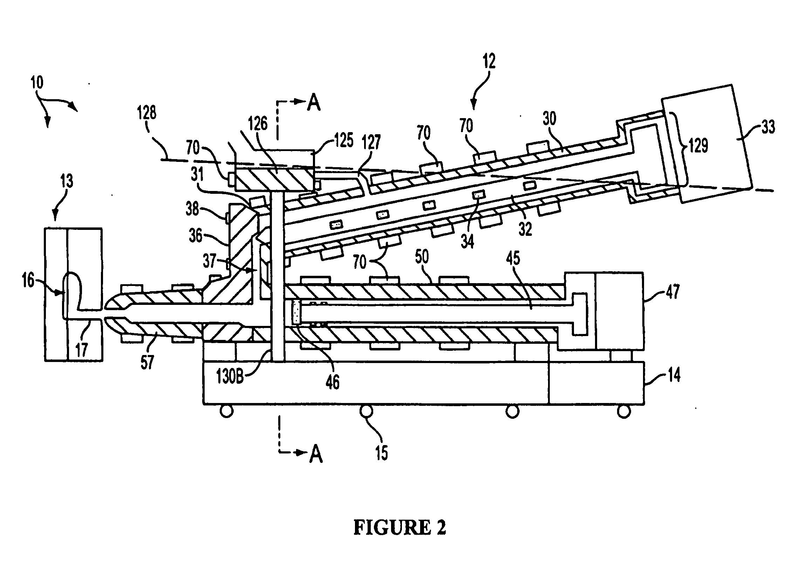

Figure 2 is a schematic illustration of a side view of an injection molding system 10. It should be noted that the invention is not limited to the system 10 shown in Figure 2. Various other chamber configurations may be used and many different materials (i.e., metals, composites, plastics) may be injection molded where the liquid feed material is maintained below an opening to a driving mechanism and/or where the melt feeder is supported by the machine base. The system 10 includes an injection molding apparatus 12 and a mold 13. The apparatus 12 contains a base 14. The base 14 preferably contains the electronic components of the apparatus 12.
The base 14 is preferably mounted on wheels and/or rails 15 such that it may be retracted from the mold 13 after each injection step, and advanced toward the mold 13 before each injection step.by a motor or hydraulics (not shown). However, if desired, the base 14 may remain stationary during the molding process. (i.e., the injection molding process operates without a sprue break). The mold 13 contains a mold cavity 16 and sprue 17.

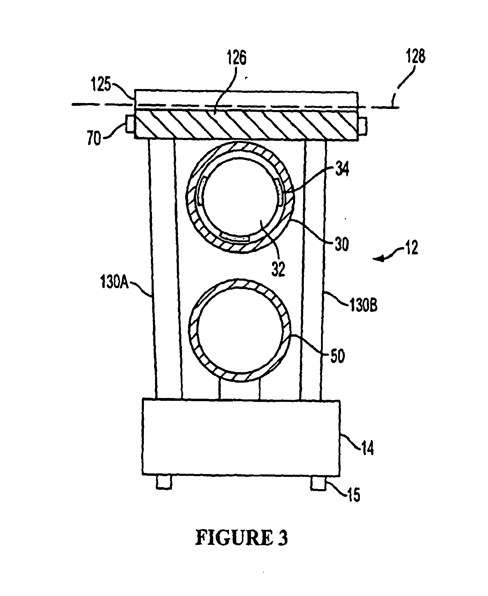

The injection molding apparatus 12 also contains a metering chamber 30 and an injection chamber 50. Preferably, each chamber 30, 50 comprises a separate cylindrical barrel, as shown in Figure 3.
However, other chamber configurations may be used if desired.

The injection chamber 50 is located in a first plane and mounted over the base 14 of the apparatus 12. Preferably, the injection chamber 50 is mounted directly onto the base 14 in a horizontal plane.
However, the injection chamber 50 may be mounted in a plane other than a horizontal plane.

The metering chamber 30 is located at least partially above the first plane (i.e., above the injection chamber 50). Preferably, the metering chamber 30 is located entirely over the injection chamber 50 and inclined 5 to 60 degrees, such as 20 to 45 degrees, with respect to the horizontal direction, as shown in Figure 2. However, the lower portion 31 of metering chamber 30 may be located adjacent to the side of the injection chamber 50, while the metering chamber 30 is inclined with respect to the horizontal direction as shown in U.S. Patent No. 5,836,372.

The lower end 31 of the metering chamber 30 is mounted to the injection chamber 50. For example, the lower end 31 of chamber 30 may be mounted to the top of the injection chamber 50, as shown in Figure 2. Alternatively, the lower end 31 of chamber 30 may be mounted to the side of the injection chamber 50, as shown in U.S. Patent No. 5,836,372. Preferably, a connector 36 is used to connect chamber 30 to chamber 50. Most preferably, the connector 36 connects chambers 30 and 50 by nuts and bolts, welds, clamps- and/or other connecting elements 38. A first conduit or port 37 located in connector 36 connects the interior of the metering chamber 30 to the interior of the injection chamber 50, such that the metering chamber 30 is in fluid communication with the injection chamber 50 (i.e., melted metal can pass from chamber 30 to chamber 50). Alternatively, the connector 36 may be omitted and the chambers 30 and 50 may be directly attached to each other.

A metering element 32 is located in the metering chamber 30. Preferably, the metering element 32 comprises a metering or stopper rod that is arranged coaxially within the metering chamber 30 and extends along the center axis of the chamber 30. The rod is used to meter the amount of melted metal that is provided from the metering chamber 30 into the injection chamber 50. The outer diameter of the rod 32 is smaller than the inner diameter of the chamber 30, such that melted metal flows in the space between the rod 32 and the chamber 30. The rod 32 is controlled by a driving mechanism 33. Preferably, the driving mechanism 33 is a motor, but may alternatively comprise a hydraulic system. The driving mechanism provides for axial movement of rod 32 in both retracting and advancing directions along the chamber 30, and optionally for rotation around the rod's 32 own axis if stirring of the melted metal is desired inside chamber 30. In an alternative aspect of the present invention, the metering element 32 may comprise a screw, as disclosed in U.S. Patent No. 5,836,372, rather than a metering rod.

In the another preferred aspect of the invention, the metering rod 32 includes optional supporting ribs or fins 34, as shown in Figures 2 and 3. The fins 34 are preferably attached to the rod 32. Preferably, there is a small clearance between the fins 34 and the inner walls of the metering chamber 30. Alternatively, fins 34 can slide on the inner circumference of the barrel 30, both coaxially with the length of chamber 30 and/or in a circular motion about the chamber 30 axis. Alternatively, the fins 34 may be attached to the inner circumference of the barrel 30 in such a manner as to allow the bare rod 32 to slide by. The fins 34 can be made of the same material as the rod 32 or from a different material that can withstand the required process temperatures. The fins prevent the rod 32 from tilting and wobbling away from the metering chamber 30 axis during advancing and retracting motion of the rod 32. They also second enhance the uniform temperature distribution of the melted metal if the rod is rotated around its axis.

The rod 32 as shown in Figure 2 has a pointed tip, but any shape may be used, including a blunt end or a rounded end. Preferably, the tip of rod 32 has a shape capable of blocking the first conduit 37 to prevent the flow of melted metal between the metering chamber 30 and injection chamber 50, when the rod 32 is fully advanced inside chamber 30. Thus, the metering or stopper rod 32 meters the amount of metal provided into the injection chamber by periodically sealing the conduit 37.

The injection chamber 50 contains a plunger or piston 45 and an injection nozzle 57. The plunger 45 contains a seal, such as O-ring(s) 46, to form an air tight seal with the inner surface of the injection chamber 50. This allows the plunger 45 to create a suction in the injection chamber 50 when the plunger 45 retracts. The plunger 45 is advanced in the injection chamber 50 by a second driving mechanism 47, such as a motor or hydraulics, to inject the melted metal from the injection chamber 50 through the nozzle 57 into the mold cavity 16 in mold 13. A plurality of resistance band or cartridge heaters 70 are arranged adjacent to chambers 30 and 50 and nozzle 57 to provide the desired temperature inside these chambers. Alternatively, one or more of the heaters 70 may comprise an RF heaters or another type of heater.

A melt feeder 125 is provided over a portion of the slanted metering chamber 30. At least one heating element 70 is disposed around its outer periphery. The heating element 70 operates to maintain the feeder 125 at a temperature high enough to keep the metal 126 supplied throughout the feeder 125 in a liquid state. A conduit or port 127 connects the melt feeder 125 with the interior metering chamber 30. The liquid metal enters the metering chamber 30 from feeder 125 through the conduit 127. The feeder 125 may have any desired shape, and may optionally contain a cover and an inert gas inlet, such as an Ar or SFe inlet, to protect the metal 126 from oxidation.

In a first preferred embodiment of the present invention, a fill line 128 of the melt feeder 125 is located below an opening 129 between the driving mechanism 33 and the metering chamber 30, as shown in Figure 2. The fill line 128 is an imaginary line which indicates the uppermost allowable liquid metal 126 level in the feeder 125. Thus, the liquid metal 126 level in the feeder is always maintained below the opening 129 into the driving mechanism 33, such as a motor. The opening 129 is provided to allow the driving mechanism 33 to be connected to the metering element 32.

The liquid metal does not seep into the driving mechanism 33 because the metal 126 in the feeder 125 (and thus in the metering chamber 30) is maintained below the opening 129 into the driving mechanism 33. Since the liquid metal 126 is at its highest point in the apparatus 12 while it is in the feeder 125, the liquid metal ordinarily does not flow above the fill line 128 in any part of the apparatus 12 because it would have to flow against the force of gravity to be above the fill line 128.

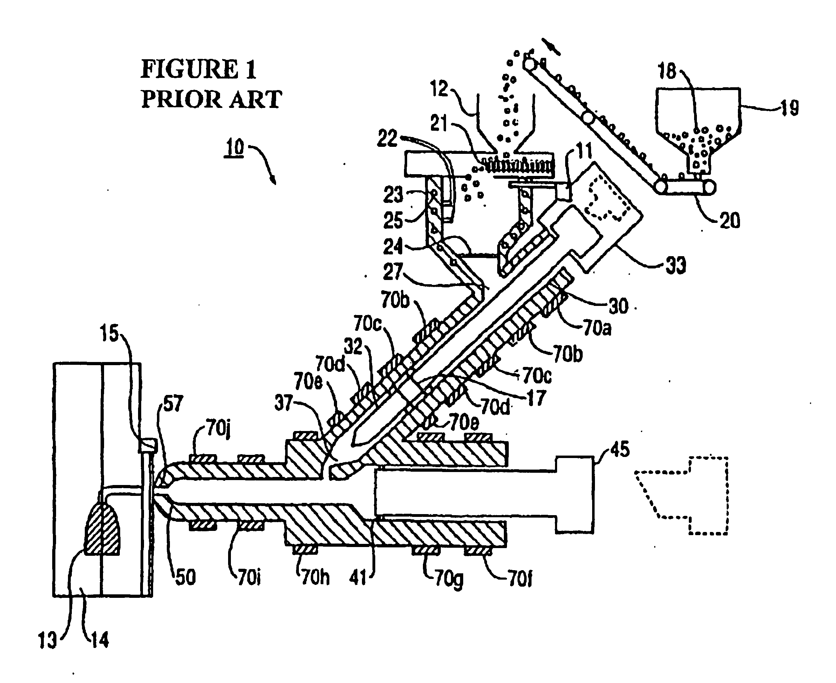

In order to maintain the level of the liquid metal 126 below the opening 129 in the feeder 125 and metering chamber 30, the location and/or dimensions of the feeder 125 may differ compared to the feeder 23 of the prior art apparatus illustrated in Figure 1. For example, the feeder 23 is mounted over the rear or upper portion of the metering barrel in the prior art apparatus shown in Figure 1. However, the feeder 1 25 of the first preferred embodiment of the present invention is preferably located over the front or lower portion 31 of the metering chamber 30. Thus, the second conduit 127 between the feeder 125 and the metering chamber 30 extends from a sidewall of the feeder 125 into a rear or upper portion of the metering chamber 30.

In another preferred aspect of the first embodiment, the width of the melt feeder 125 is greater than a height of the melt feeder, as shown in Figures 2 and 3. This allows more metal 126 to be stored in the feeder 125 below the fill line 128.

In an alternative aspect of the first preferred embodiment, the top of the melt feeder 125 is located below the opening 129 to the driving mechanism 33. This configuration is advantageous because it further reduces the likelihood that liquid metal 1 26 would seep into the driving mechanism 33. For example, large feed metal ingots may be provided into the feeder 125 and melted therein to the liquid state. Even if the large metal ingots cause the liquid metal 126 to splash upwards in the feeder 125, this would still not cause liquid metal in the metering chamber 30 to enter the opening 129 into the driving mechanism, because the entire feeder 125 is located below the opening 129.

in a second preferred aspect of the present invention, the melt feeder 125 is mounted to the base 14 of the apparatus 12. The melt feeder is mounted to the base 14 of the apparatus 12 using a least one support beam 130A, 130B. Preferably, more than one support beam is used, such as two to four beams. The beams may be any weight bearing members that bear at least 50%, preferably at least 90% of the weight of the feeder 125. The beams may have any desired shape. For example, the beams may comprise rods having a circular or polygonal cross section or the beams may comprise plates that extend along the length of the feeder.

One configuration of the beams 130A, 130B is shown in Figure 3. A first weight bearing support beam 130A extends from the melt feeder 125 to the base 14 adjacent to a first side of the metering chamber 30 and the injection chamber 50. A second weight bearing support beam 130B extends from the melt feeder 125 to the base 14 adjacent to a second side of the metering chamber 30 and the injection chamber 50. The metering chamber 30 and the injection chamber 50 are located between the first support beam 130A and the second support beam 130B.

The configuration of the second preferred embodiment is advantageous because the base 14 bears most or all of the weight of the feeder 125 and the liquid metal 126 located in the feeder. Thus, most or all of the weight of the feeder 125 is taken off the metering chamber 30, which extends the useful life of the connector 36 and connecting elements 38 which support the metering chamber 30 over the injection chamber 50. This decreases the system down time and repair costs.

The apparatus of the second preferred embodiment may be used separately from or together with the melt feeder of the first preferred embodiment. Thus, a melt feeder 125 connected to the base 14 by beams 130A, 130B may have a fill line 128 that is located above the opening 129 into the driving mechanism 33. Alternatively, the melt feeder 125 that has a fill line 128 below the opening 129 may be supported by the metering chamber 30 rather than the base 14 However, in the third preferred embodiment of the present invention, the melt feeder of the first and second embodiments is used in combination. Thus, the melt feeder 125 fill line 128 is located below the opening 129 to the driving mechanism 33 and the melt feeder 125 is mounted to the base 14 by support beams 1 30A, 130B.

An injection molding method using system 10 will now be described. After injection (i.e. after a shot), the nozzle 57 is separated from the mold 13. Preferably, this is accomplished by moving the injection molding apparatus 12 away from a stationary mold 13 die. Metal feed, such as solid metal ingots or pellets are provided into the melt feeder 125. The metal feed is melted into the liquid state. The fill line 128 of the liquid metal 126 is below a first opening 129 between an inclined metering chamber 30 and a first driving mechanism 33 attached to the upper portion of chamber 30. The metal is metered from the feeder 125 into the metering chamber 30 through the upper conduit 127.

The metering rod 32 is retracted in the metering chamber 30 to allow the liquid metal to flow from chamber 30 through the lower conduit 37 into the injection chamber 50 by the force of gravity. The rod 32 may be rotated about its axis to homogenize the temperature of the metal in the metering chamber 30.

The plunger 45 which is housed in the injection chamber 50 is retracted. Preferably, during retraction the plunger 45 acts like a pharmaceutical syringe that draws in liquid from a container of liquid. Specifically, as the plunger 45 retracts, it creates a suction to draw in melted metal from the metering chamber 30 into the injection chamber 50 through the lower conduit 37.

After plunger 45 retraction is stopped, the rod 32 is advanced downward. As a result, any metal collected in a lower portion of the metering chamber 30 is pushed into the injection chamber 50 through the lower conduit 37. The rod 32 preferably advances through barrel 30 until its end closes off the inlet to conduit 37. The rod 32 preferably remains in this position to keep conduit 37 sealed off until injection is complete and the next shot cycle is started. The advanced rod 32 prevents metal and gases from flowing between the metering chamber 30 and the injection chamber 50. The plunger 45 is then advanced in the injection chamber to inject the metal into the mold cavity 16. The nozzle 57 tip may be sealed between injection cycles by a shutter, by forming semi-solid residue in the nozzle tip or by using a nozzle with an upraised or upwardly tilted tip.

Preferably, the temperatures in chambers 30 and 50 and in nozzle 57 are set sufficiently high to maintain the melted metal entirely in the liquid state from the time it exits the feeder 125 into the metering chamber 30 to the time the melted metal is injected into the mold 13 from the injection chamber 50. The temperatures may be varied depending on the type of metal part being molded. However, if it is desired to practice the method described in U.S. Patent Nos. 5,836,372 or 6,135,196, then the metal may be maintained in the semi-solid state in chambers 30 and/or 50. The terms "melted metal" and "melted material" as used herein encompasses metals, metal alloys, plastics and other materials in a liquid or semi-solid state which can be processed in an injection molding system. It should be noted that the invention is not limited to the actual chamber layout'shown in Figures 2 and 3. Various other injection molding apparatus chamber configurations may be used where the liquid feed material is maintained below an opening to a driving mechanism and/or where the melt feeder is supported by the machine base.

A metal part is preferably produced by injection molding a magnesium (Mg) alloy in a liquid state. The invention is not limited to processing of Mg and is equally applicable to other types of materials, such as plastics, pure metals and metal alloys. A wide range of such pure metals and alloys are potentially useful in this invention, including magnesium (Mg), Mg alloys, aluminum (Al), Al alloys, zinc (Zn), Zn alloys, composite materials (such as a metal ceramic composite) and the like.

The foregoing description of the invention has been presented for purposes of illustration and description. It is not intended to be exhaustive or to limit the invention to the precise form disclosed, and modifications and variations are possible in light of the above teachings or may be acquired from practice of the invention. The drawings and description were chosen in order to explain the principles of the invention and its practical application. It is intended that the scope of the invention be defined by the claims appended hereto, and their equivalents.

## Claims

1. An injection molding apparatus, comprising:
an injection chamber (50) located in a first plane and mounted over a base (14) of the apparatus (12);
a metering chamber (30) located at least partially above the first plane, and in fluid communication with the injection chamber (50);
a metering element (32) located in the metering chamber (30);
a first driving mechanism (33) which moves the metering element (32), wherein the first driving mechanism (33) is connected to the metering chamber (30); and
a melt feeder (125) in fluid communication with the metering chamber (30);
wherein
(a) a top of the melt feeder (125) is located below a first opening (129) between the metering chamber (30) and the first driving mechanism (33); or
(b) the melt feeder (125) is mounted to the base (14) of the apparatus (12).

2. The apparatus of claim 1, wherein a width of the melt feeder (125) is greater than a height of the melt feeder (125).

3. The apparatus of claim 1, wherein the melt feeder (125) is mounted to the base (14) of the apparatus (12).

4. The apparatus of claim 3, wherein the melt feeder (125) is mounted to the base (14) of the apparatus (12) using a least one support beam (130A, 130B).

5. The apparatus of claim 4, wherein the at least one support beam (130A, 130B) comprises:
a first weight bearing support beam (130A) extending from the melt feeder (125) to the base (14) adjacent to a first side of the metering chamber (30) and the injection chamber (50); and
a second weight bearing support beam (130B) extending from the melt feeder (125) to
the base (14) adjacent to a second side of the metering chamber (30) and the injection chamber (50), such that the metering chamber (30) and the injection chamber (50) are
located between the first support beam (130A) and the second support beam (130B).

6. The apparatus of claim 1, wherein:
a fill line (128) of the melt feeder (125) is located below the first opening (129); and the
melt feeder (125) is mounted to the base (14) of the apparatus (12).

7. The apparatus of claim 6, wherein a top of the melt feeder (125) is located below the first opening (129)

8. The apparatus of claim 6. wherein a width of the melt feeder (125) is greater than a height of the melt feeder (125).

9. The apparatus of claim 6, wherein the melt feeder (125) is mounted to the base (14) of the apparatus (12) using a least one support beam (130A, 130B).

10. The apparatus of claim 9, wherein the at least one support beam (130A, 130B) comprises:
a first weight bearing support beam (130A) extending from the melt feeder (125) to the
base (14) adjacent to a first side of the metering chamber (30) and the injection chamber
(50): and
a second weight bearing support beam (1308) extending from the melt feeder (125) to
the base (14) adjacent to a second side of the metering chamber (30) and the injection chamber (50), such that the metering chamber (30) and the injection chamber (50) are located between the first support beam (130A) and the second support beam (130B).

11. The apparatus of claim 6, further comprising:
a first conduit (37) connecting the metering chamber (30) to the injection chamber (50);
and
a second conduit (127) connecting the melt feeder (125) to the metering chamber (30).

12. The apparatus of claim 11, wherein:
the melt feeder (125) is mounted over a front or lower portion of the metering chamber (30);
the second conduit (127) extends from a sidewall of the melt feeder (125) into a rear or upper portion of the metering chamber (30);
the injection chamber (50) is mounted horizontally to the base (14);
the metering chamber (30) is located over the injection chamber (50) and inclined 5 to 60 degrees with respect to the horizontal direction;
the front or lower end (31) of the metering chamber (30) is mounted to the injection chamber (50); and
the first driving mechanism (33) is mounted to an upper end of the metering chamber (30).

13. The apparatus of claim 12, wherein:
the base (14) contains apparatus electronics and elements (15) which allow the apparatus (12) to move towards and away from a mold (13);
the injection chamber (50) comprises a first cylindrical barrel;
the metering chamber (30) comprises a second cylindrical barrel;
the metering element (32) comprises a metering rod which is adapted to rotate in the metering chamber (30) and to move axially in the metering chamber (30) to seal the first conduit (37); and
the first driving mechanism (33) comprises at least one of hydraulics or motor.

14. The apparatus of claim 13, further comprising:
an injection nozzle (57) attached to the injection chamber (50);
a plunger (45) which is adapted to inject metal through the nozzle (57)
located in the injection chamber (50);
a second driving mechanism (47) which is adapted to advance the
plunger (45) in the injection chamber (50) to inject the metal through the nozzle (57); and
heating elements (70) located adjacent to the melt feeder (125), the metering chamber (30), the injection chamber (50) and the nozzle (57).

15. The apparatus of claim1, wherein the melt is a melted metal.

16. A metal injection molding method, comprising:
providing solid metal into a melt feeder (125);
melting the solid metal into a liquid state, such that a fill line of the liquid metal is below a first opening (129) between an inclined metering chamber (30) and a first driving mechanism (33);
providing the liquid metal into the inclined metering chamber (30) containing the first driving mechanism (33) attached to an upper portion of the metering chamber (30); metering the metal from the metering chamber (30) into an injection chamber (50) located below a lower portion (31) of the metering chamber (30): and
injecting the metal from the injection chamber (50) into a mold (13).

17. The method of claim 16, wherein the melt feeder (125) is mounted to apparatus base (14) which supports the injection chamber (50).

18. The method of claim 17, further comprising rotating a metering rod (32) in the metering chamber (30) by the first driving mechanism (33) to homogenize a temperature of the liquid metal in the metering chamber (30).

19. The method of claim 17, wherein metering the metal comprises moving a metering rod (32) in the metering chamber (30) to prevent the metal from advancing from the metering chamber (30) to the injection chamber (50) during the injection step.

20. The method of claim 19, further comprising:
retracting a plunger (45) in the injection chamber (50) to create a suction in the injection chamber (50) to assist in drawing the metal from the metering chamber (30) into the injection chamber (50); and
advancing the plunger (45) to inject the metal into the mold (13).

21. The method of claim 16, wherein the metal comprises an aluminum or magnesium alloy.

## Patentansprüche

1. Spritzgussvorrichtung, aufweisend:
eine Einspritzkammer (50), die in einer ersten Ebene angeordnet ist und über einer Basis (14) der Vorrichtung (12) montiert ist;
eine Dosierkammer (30), die zumindest teilweise oberhalb der ersten Ebene angeordnet ist und die mit der Einspritzkammer (50) in Fließverbindung steht;
ein Dosierelement (32), das in der Dosierkammer (30) angeordnet ist;
einen ersten Antriebsmechanismus (33), der das Dosierelement (32) bewegt, wobei der erste Antriebsmechanismus (33) mit der Dosierkammer (30) verbunden ist; und
eine Schmelzebeschickungsvorrichtung (125), die in Fließverbindung mit der Dosierkammer (30) steht; wobei
(a) eine Oberkante der Schmelzebeschickungsvorrichtung (125) unterhalb einer ersten Öffnung (129) zwischen der Dosierkammer (30) und dem ersten Antriebsmechanismus (33) angeordnet ist; oder
(b) die Schmelzebeschickungsvorrichtung (125) an der Basis (14) der Vorrichtung (12) befestigt ist.

2. Vorrichtung nach Anspruch 1, wobei eine Breite der Schmelzebeschickungsvorrichtung (125) größer als eine Höhe der Schmelzebeschickungsvorrichtung (125) ist.

3. Vorrichtung nach Anspruch 1, wobei die Schmelzebeschickungsvorrichtung (125) an der Basis (14) der Vorrichtung (12) befestigt ist.

4. Vorrichtung nach Anspruch 3, wobei die Schmelzebeschickungsvorrichtung (125) an der Basis (14) der Vorrichtung (12) unter Verwendung mindestens eines Stützbalkens (130A, 130B) befestigt ist.

5. Vorrichtung nach Anspruch 4, wobei der mindestens eine Stützbalken (130A, 130B) folgendes aufweist: einen ersten Last tragenden Stützbalken (130A), der sich neben einer ersten Seite der Dosierkammer (30) und der Einspritzkammer (50) von der Schmelzebeschickungsvorrichtung (125) zu der Basis (14) erstreckt; und einen zweiten Last tragenden Stützbalken (130B), der sich neben einer zweiten Seite der Dosierkammer (30) und der Einspritzkammer (50) von der Schmelzebeschickungsvorrichtung (125) zu der Basis (14) erstreckt, so dass die Dosierkammer (30) und die Einspritzkammer (50) zwischen dem ersten Stützbalken (130A) und dem zweiten Stützbalken (130B) angeordnet sind.

6. Vorrichtung nach Anspruch 1, wobei eine Fülllinie (128) der Schmelzebeschickungsvorrichtung (125) unterhalb der ersten Öffnung (129) angeordnet ist und die Schmelzebeschickungsvorrichtung (125) an der Basis (14) der Vorrichtung (12) befestigt ist.

7. Vorrichtung nach Anspruch 6. wobei eine Oberkante der Schmelzebeschickungsvorrichtung (125) unterhalb der ersten Öffnung (129) angeordnet ist.

8. Vorrichtung nach Anspruch 6, wobei eine Breite der Schmelzebeschickungsvorrichtung (125) größer als eine Höhe der Schmelzebeschickungsvorrichtung (125) ist.

9. Vorrichtung nach Anspruch 6, wobei die Schmelzebeschickungsvorrichtung (125) an der Basis (14) der Vorrichtung (12) unter Verwendung mindestens eines Stützbalkens (130A, 130B) befestigt ist.

10. Vorrichtung nach Anspruch 9, wobei der mindestens eine Stützbalken (130A, 130B) folgendes aufweist: einen ersten Last tragenden Stützbalken (130A), der sich neben einer ersten Seite der Dosierkammer (30) und der Einspritzkammer (50) von der Schmelzebeschickungsvorrichtung (125) zu der Basis (14) erstreckt; und einen zweiten Last tragenden Stützbalken (130B), der sich neben einer zweiten Seite der Dosierkammer (30) und der Einspritzkammer (50) von der Schmelzebeschickungsvorrichtung (125) zu der Basis (14) erstreckt, so dass die Dosierkammer (30) und die Einspritzkammer (50) zwischen dem ersten Stützbalken (130) und dem zweiten Stützbalken (130B) angeordnet sind.

11. Vorrichtung nach Anspruch 6, ferner aufweisend einen ersten Kanal (37), der die Dosierkammer (30) mit der Einspritzkammer (50) verbindet; und einen zweiten Kanal (127), der die Schmelzebeschickungsvorrichtung (125) mit der Dosierkammer (30) verbindet.

12. Vorrichtung nach Anspruch 11, wobei
die Schmelzebeschickungsvorrichtung (125) über einem vorderen oder unteren Abschnitt der Dosierkammer (30) montiert ist; sich der zweite Kanal (127) von einer Seitenwand der Schmelzebeschickungsvorrichtung (125) in einen hinteren oder oberen Abschnitt der
Dosierkammer (30) erstreckt; die Einspritzkammer (50) horizontal an der Basis (14) befestigt ist;
die Dosierkammer (30) oberhalb der Einspritzkammer (50) angeordnet ist und um 5 bis 60 Grad gegenüber der der horizontalen Richtung geneigt ist;
das vordere oder untere Ende (31) der Dosierkammer (30) an der Einspritzkammer (50) befestigt ist; und
der erste Antriebsmechanismus (33) an einem oberen Ende der Dosierkammer (30) befestigt ist.

13. Vorrichtung nach Anspruch 12, wobei:
die Basis (14) Systemelektronik und Elemente (15) enthält, die es der Vorrichtung (12) erlauben, sich zu einer Form (13) hin und von dieser weg zu bewegen;
die Einspritzkammer (50) einen ersten Zylinder aufweist;
die Dosierkammer (30) einen zweiten Zylinder aufweist;
das Dosierelement (30) einen Dosierstab aufweist, der eingerichtet ist, in der Dosierkammer (30) zu rotieren und sich axial in der Dosierkammer (30) zu bewegen, um den ersten Kanal (37) abzudichten; und
der erste Antriebsmechanismus (33) eine Hydraulik und/oder einen Motor aufweist.

14. Vorrichtung nach Anspruch 13, ferner aufweisend:
eine Einspritzdüse (57), die an der Einspritzkammer (50) angebaut ist;
einen Kolben (45), der eingerichtet ist, Metall durch die Düse (57) zu spritzen, und der in der Einspritzkammer angeordnet ist (50); einen zweiten Antriebsmechanismus (47), der eingerichtet ist, den Kolben (45) in der Einspritzkammer (50) voranzutreiben, um das Metall durch die Düse (57) zu spritzen;
und
Heizelemente (70), die benachbart zu der Schmelzebeschickungsvorrichtung (125), der Dosierkammer (30), der Einspritzkammer (50) und der Düse (57) angeordnet sind.

15. Vorrichtung nach Anspruch 1, wobei die Schmelze ein geschmolzenes Metall ist.

16. Spritzgussverfahren, die folgenden Schritte aufweisend:
Einbringen von festem Metall in eine Schmelzebeschickungsvorrichtung (125);
Schmelzen des festen Metalls in einen flüssigen Zustand, so dass eine Fülllinie des flüssigen Metalls unterhalb einer ersten Öffnung (129) zwischen einer geneigten Dosierkammer (30) und einem ersten Antriebsmechanismus (33) ist;
Einbringen des flüssigen Metalls in die geneigte Dosierkammer (30), die den ersten Antriebsmechanismus (33) enthält, welcher an einem oberen Abschnitt der Dosierkammer (30) angebaut ist;
Dosieren des Metalls von der Dosierkammer (30) in eine Einspritzkammer (50), die unterhalb eines unteren Abschnitts (31) der Dosierkammer (30) angeordnet ist; und
Einspritzen des Metalls von der Einspritzkammer (50) in eine Form (13).

17. Verfahren nach Anspruch 16, wobei die Schmelzebeschickungsvorrichtung (125) an der Basis (14) der Vorrichtung befestigt ist, die die Einspritzkammer (50) trägt.

18. Verfahren nach Anspruch 17, ferner aufweisend das Rotieren eines Dosierstabs (32) in der Dosierkammer (30) durch den ersten Antriebsmechanismus (33), um eine Temperatur des flüssigen Metalls in der Dosierkammer (30) zu vergleichmäßigen.

19. Verfahren nach Anspruch 17, wobei das Dosieren des Metalls das Bewegen eines Dosierstabs (32) in der Dosierkammer (30) umfasst, um zu verhindern, dass das Metall während des Einspritzschritts von der Dosierkammer (30) in die Einspritzkammer (50) vordringt.

20. Verfahren nach Anspruch 19, ferner aufweisend:
Zurückziehen eines Kolbens (45) in der Einspritzkammer (50), um einen Sog in der Einspritzkammer (50) zu erzeugen, um das Ansaugen des Metalls von der Dosierkammer (30) in die Einspritzkammer (50) zu unterstützen; und
Vorantreiben des Kolbens (45), um das Metall in die Form (13) einzuspritzen.

21. Verfahren nach Anspruch 16, wobei das Metall eine Aluminium- oder Magnesiumlegierung aufweist.

## Revendications

1. Dispositif de moulage par injection, comprenant:
une chambre d'injection (50) localisée dans un premier plan et montée au-dessus d'une base (14) du dispositif (12) ;
une chambre de dosage (30) localisée au moins partiellement au-dessus du premier plan et étant en communication fluide avec la chambre d'injection (50) ;
un élément de dosage (32) localisé dans la chambre de dosage (30) ;
un premier mécanisme d'entrainement (33) qui meut l'élément de dosage (32), où le premier mécanisme d'entrainement (33) est connecté à la chambre de dosage (30) ; et
un dispositif d'alimentation d'une fonte (125) étant en communication fluide avec la chambre de dosage (30) ; où
(a) une extrémité supérieure du dispositif d'alimentation d'une fonte (125) est localisée au-dessous d'une première aperture (129) entre la chambre de dosage (30) et le premier mécanisme d'entrainement (33) ;
ou
(b) le dispositif d'alimentation d'une fonte (125) est monté à la base (14) du dispositif (12).

2. Dispositif selon la revendication 1, où une largeur du dispositif d'alimentation d'une fonte (125) est plus grande qu'une hauteur du dispositif d'alimentation d'une fonte (125).

3. Dispositif selon la revendication 1, où le dispositif d'alimentation d'une fonte (125) est monté à la base (14) du dispositif (12).

4. Dispositif selon la revendication 3, où le dispositif d'alimentation d'une fonte (125) est monté à la base (14) du dispositif (12) utilisant au moins une barre de support (130A, 130B).

5. Dispositif selon la revendication 4, où la au moins une barre de support (130A, 130B) comprend : une première barre de support (130A) portante du poids s'étendant du dispositif d'alimentation d'une fonte (125) à la base (14) à coté d'un premier coté de la chambre de dosage (30) et de la chambre d'injection (50) ; et une deuxième barre de support (130B) portante du poids s'étendant du dispositif d'alimentation d'une fonte (125) à la base (14) à coté d'un deuxième coté de la chambre de dosage (30) et de la chambre d'injection (50), de sorte que la chambre de dosage (30) et la chambre d'injection (50) sont localisées entre la première barre de support (130A) et la deuxième barre de support (130B).

6. Dispositif selon la revendication 1, où une ligne de remplissage (128) du dispositif d'alimentation d'une fonte (125) est localisée au-dessous de la première aperture ; et le dispositif d'alimentation d'une fonte (125) est monté à la base (14) du dispositif (12).

7. Dispositif selon la revendication 6, où une extrémité supérieure du dispositif d'alimentation d'une fonte (125) est localisée au-dessous de la première aperture (129).

8. Dispositif selon la revendication 6, où une largeur du dispositif d'alimentation d'une fonte (125) est plus grande qu'une hauteur du dispositif d'alimentation d'une fonte (125).

9. Dispositif selon la revendication 6, où le dispositif d'alimentation d'une fonte (125) est monté à la base (14) du dispositif (12) utilisant au moins une barre de support (130A, 130B).

10. Dispositif selon la revendication 9, où la au moins une barre de support (130A, 130B) comprend : une première barre de support (130A) portante du poids s'étendant du dispositif d'alimentation d'une fonte (125) à la base (14) à coté d'un premier coté de la chambre de dosage (30) et de la chambre d'injection (50) ; et une deuxième barre de support (130B) portante du poids s'étendant du dispositif d'alimentation d'une fonte (125) à la base (14) à coté d'un deuxième coté de la chambre de dosage (30) et de la chambre d'injection (50), de sorte que la chambre de dosage (30) et la chambre d'injection (50) sont localisées entre la première barre de support (130A) et la deuxième barre de support (130B).

11. Dispositif selon la revendication 6, comprenant de plus une première conduite (37) connectant la chambre de dosage (30) et la chambre d'injection (50) ; et une deuxième conduite (127) connectant le dispositif d'alimentation d'une fonte (125) et la chambre de dosage (30).

12. Dispositif selon la revendication 11, où :
le dispositif d'alimentation d'une fonte (125) est monté au-dessus d'une section antérieure ou inférieure de la chambre de dosage (30) ;
la deuxième conduite (127) s'étend d'une paroi latéral du dispositif d'alimentation d'une fonte (125) à une section arrière ou supérieure de la chambre de dosage (30) ;
la chambre d'injection (50) est montée horizontalement à la base (14) ;
la chambre de dosage (30) est localisée au-dessus de la chambre d'injection (50) et est inclinée de 5 à 60 degrés par rapport de la direction horizontale ;
l'extrémité antérieure ou inférieure (31) de la chambre de dosage (30) est montée à la chambre d'injection (50) ; et
le premier mécanisme d'entrainement (33) est monté à une extrémité supérieure de la chambre de dosage (30).

13. Dispositif selon la revendication 12, où :
la base (14) contient d'électronique de système et des éléments qui permettent le dispositif (12) de mouvoir vers et d'un moule (13) ;
la chambre d'injection (50) comprend un premier cylindre ;
la chambre de dosage (30) comprend un deuxième cylindre ;
l'élément de dosage (32) comprend un barreau de dosage qui est adapté pour tourner dans la chambre de dosage (30) et pour mouvoir axialement dans la chambre de dosage (30) pour étancher la première conduite (37) ; et
le premier mécanisme d'entrainement (33) comprend une hydraulique et/ou un moteur.

14. Dispositif selon la revendication 13, comprenant de plus :
une buse d'injection (57) attachée à la chambre d'injection (50) ;
un piston (45) qui est adapté pour injecter du métal par la buse (57) et qui est localisé dans la chambre d'injection (50) ;
un deuxième mécanisme d'entrainement (47) qui est adapté pour avancer le piston (45) dans la chambre d'injection (50) pour injecter le métal par la buse (57) ; et
des éléments de chauffage (70) localisés à coté du dispositif d'alimentation d'une fonte (125), de la chambre de dosage (30), de la chambre d'injection (50) et de la buse (57).

15. Dispositif selon la revendication 1, où la fonte est du métal fondu.

16. Procédé de moulage par injection d'un métal, comprenant :
l'alimentation du métal solide dans un dispositif d'alimentation d'une fonte (125) ;
la fusion du métal solide dans un état liquide, de sorte qu'une ligne de remplissage du métal liquide est au-dessous d'une première aperture (129) entre une chambre de dosage (30) inclinée et un premier mécanisme d'entrainement (33) ;
l'alimentation du métal liquide dans la chambre de dosage (30) inclinée contenant le premier mécanisme d'entrainement (33) attaché à une section supérieur de la chambre de dosage (30) ;
le dosage du métal de la chambre de dosage (30) dans une chambre d'injection (50) localisée au-dessous d'une section inférieure (31) de la chambre de dosage (30) ; et
l'injection du métal de la chambre d'injection (50) dans un moule (13).

17. Procédé selon la revendication 16, où le dispositif d'alimentation d'une fonte (125) est monté à la base (14) du dispositif qui support la chambre d'injection (50).

18. Procédé selon la revendication 17, comprenant de plus la rotation d'un barreau de dosage (32) dans la chambre de dosage (30) par le premier mécanisme d'entrainement (33) pour homogénéiser une température du métal liquide dans la chambre de dosage (30).

19. Procédé selon la revendication 17, où le dosage du métal comprend le mouvement d'un barreau de dosage (32) dans la chambre de dosage (30) pour prévenir le métal d'avancer de la chambre de dosage (30) à la chambre d'injection (50) pendant l'étape d'injection.

20. Procédé selon la revendication 19, comprenant de plus la rétraction d'un piston (45) dans la chambre d'injection (50) pour créer une aspiration dans la chambre d'injection (50) pour assister sucer le métal de la chambre de dosage (30) dans la chambre d'injection (50) ; et l'avancement du piston (45) pour injecter le métal dans le moule (13).

21. Procédé selon la revendication 16, où le métal comprend un alliage d'aluminium ou de magnésium.
